# FASCICULE DE BREVET EUROPEEN

(11) **EP 1 068 652 B1**
(45) Date de publication et mention de la délivrance du brevet: **03.03.2004**
(21) Numéro de dépôt: 99907708.4
(22) Date de dépôt: 15.03.1999
(51) Int. Cl.: H01Q 7/00, G06K 19/077

(54) **DISPOSITIF DE CONTROLE DE L'IMPEDANCE RAMENEE SUR L'ANTENNE D'UNE ETIQUETTE ELECTRONIQUE**
VORRICHTUNG ZUR KONTROLLE DER AUF DIE ANTENNE ZURÜCKGEFÜRTEN IMPEDANZ EINES ELEKTRONISCHEN ETIKETTS
DEVICE FOR CONTROLLING THE IMPEDANCE RETURNED ON AN ELECTRONIC LABEL ANTENNA

(30) Priorité: 31.03.1998 FR 9803994
(43) Date de publication de la demande: 17.01.2001
(73) Titulaire: Gemplus, 13881 Gémenos Cedex (FR)
(72) Inventeur: OUSSET, Michel, F-13600 La Ciotat (FR)
(86) Numéro de dépôt international: PCT/FR1999/000572
(87) Numéro de publication internationale: WO 1999/050930

(56) Documents cités:
- EP-A- 0 820 178
- FR-A- 2 623 311
- GB-A- 2 321 551
- US-A- 5 173 705

## Description

Les étiquettes électroniques sans contact qui sont utilisées pour identifier des produits en les soumettant à un champ électromagnétique d'un dispositif de lecture ou de lecture/écriture. La composante magnétique du champ électromagnétique est détectée par une antenne à circuit accordé. Un dispositif doit contrôler l'impédance ramenée sur l'antenne pour obtenir une impédance optimale quelles que soient les conditions de fonctionnement.

Le document FR2623311 IZADNEGAHDAR décrit un système d'identification à étiquettes électroniques "passives". Des moyens récepteurs et décodeurs dérivent un signal électromagnétique codé d'interrogation. Ce système prévoit le principe de modulation en tout ou rien au moyen d'un transistor MOS de l'étiquette.

Le document US5173705 THOMSON décrit l'échange de données entre un poste fixe et une étiquette à fréquence porteuse supérieure à 1GHz. Les données sont échangées au moyen d'une onde électromagnétique. Ce document US5173705 THOMSON ne décrit pas une liaison par couplage magnétique entre deux boudes inductives. Ce document US5173705 THOMSON prévoit à l'inverse la transmission de données au moyen d'une capacité variable dérivée d'un transistor, où cette capacité module le signal de porteuse par désadaptation d'impédance de l'antenne. Ce document US5173705 THOMSON ne prévoit par contre pas que les données puissent être transmises par désaccord de l'antenne boucle.

Le document EP0820178 MOTOROLA décrit un téléphone cellulaire qui incorpore tant une fonction téléphonique cellulaire qu'une fonction de carte à puce. Ce téléphone inclut aussi une interface radio fréquence (RF) pour la communication sans fil entre la carte à puce et un lecteur externe. La transmission de données est effectuée depuis la carte vers le lecteur par commutation de capacité.

Le document GB2321551 HALPERN décrit un circuit de commande d'oscillation qui contient des moyens pour ajuster l'émission d'une certaine gamme de fréquence utilisable, avec affaiblissement ou renforcement de l'émission de cette gamme et évenruellement la commutation d'éléments dans le circuit d'accès via des commutateurs électroniques. Il est également prévu de modifier l'énergie et l'accord de transfert de l'information. Mais ce document GB2321551 HALPERN ne décrit pas la modification de l'accord de l'antenne pour contrôler l'énergie reçue.

Selon les conditions de fonctionnement de l'ensemble étiquette/dispositif de lecture, l'impédance moyenne ramenée sur l'antenne varie et il en est de même des performances en termes de distance maximale de communication et de qualité de communication.

Pour obtenir un fonctionnement optimal, la valeur (R_{mod}) de la résistance de modulation est ajustée à la fabrication de l'étiquette électronique avec une précision de l'ordre du pourcent, opération d'ajustement dont le coût n'est pas négligeable sur le prix de revient.

Un but de l'invention est de contrôler l'impédance ramenée sur l'antenne pour obtenir une impédance optimale quelles que soient les conditions de fonctionnement.

Ce but est atteint en utilisant une résistance de modulation et un condensateur d'accord d'antenne dont les valeurs respectives de résistance et de capacité sont modifiées en fonction de paramètres tels que la valeur de la tension d'alimentation, un message en provenance du dispositif de lecture ou encore un message pré-programmé.

L'invention est définie par les revendications.

Les paramètres pour élaborer les signaux électriques sont, par exemple, la tension d'alimentation, les conditions de fonctionnement et les chiffras binaires des messages à transmettre au dispositif de lecture. Dans ce dernier cas, la modulation s'obtient par modification des valeurs de la résistance de modulation et/ou de la capacité du condensateur d'accord, c'est-à-dire sans utiliser un interrupteur.

D'autres caractéristiques et avantages de l'invention apparaîtront de la description d'un exemple de réalisation.
- la figure 1 est un schéma simplifié d'une étiquette électronique selon l'art antérieur,
- la figure 2 est un schéma fonctionnel simplifié d'une étiquette électronique comprenant un dispositif selon l'invention, et
- les figures 3 et 4 sont des diagrammes montrant des courbes de variation de certains paramètres.

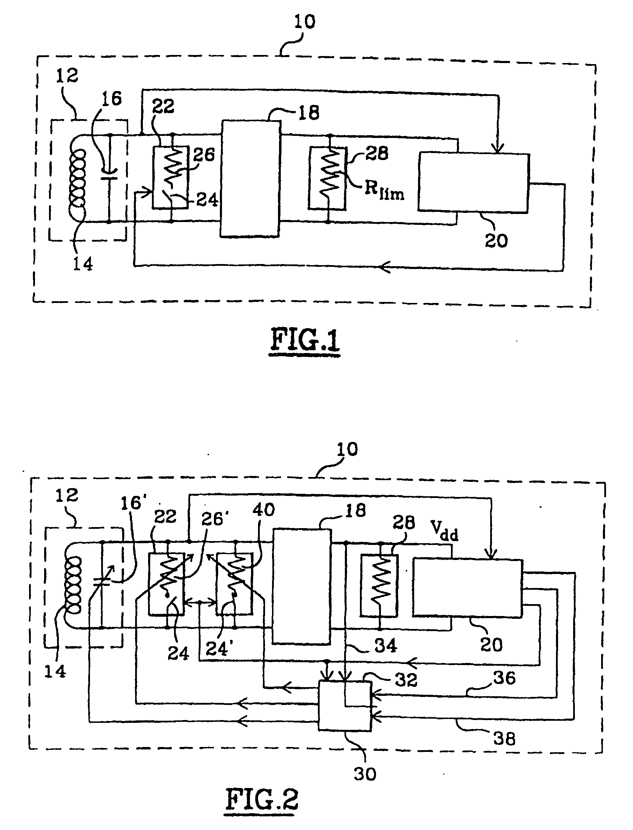

Les mêmes références désignent des éléments identiques sur les figures 1 à 4. Sur la figure 2, les éléments caractéristiques de l'invention comprennent :
- un condensateur d'accord 16' dont la capacité C est variable,
- une résistance de modulation 26' dont la valeur R_{mod} est variable.

Sur la figure 1, une étiquette électronique 10 connue comprend une antenne 12 comprenant un enroulement inductif 14. Un condensateur 16 est connecté en parallèle sur l'enroulement inductif 14 et réalise avec ce dernier un circuit oscillant accordé à une fréquence porteuse F₀. Les bornes du circuit accordé sont connectées à un circuit de redressement et filtrage 18 qui fournit sur les bornes de sortie une tension d'alimentation V_{dd} qui est appliquée à tous les circuits électroniques 20 de l'étiquette 10.

Ces circuits 20 réalisent la détection, la démodulation et l'interprétation des signaux modulés à la fréquence F₀ ainsi que l'élaboration des messages binaires à transmettre à un dispositif de lecture (non représenté) par l'intermédiaire de l'antenne en modulant la charge de l'antenne par un modulateur 22. Ce modulateur 22 comprend schématiquement un interrupteur 24 qui est actionné par les signaux de message et une résistance 26 dite de modulation R_{mod}.

Afin de protéger les circuits électroniques contre une surtension, la tension d'alimentation V_{dd} est écrêtée par un circuit limiteur 28 dont la résistance variable Rₗᵢₘ a été représentée.

Le message binaire est émis par l'étiquette 10 au rythme de l'ouverture et de la fermeture de l'interrupteur 24 qui module le courant consommé par l'antenne 12. Par suite du couplage de l'antenne 12 avec celle du dispositif de lecture, la puissance émise par ce dernier varie en fonction de l'état logique transmis. Il en résulte une modulation d'amplitude qui est détectée par un démodulateur.
- une résistance de limitation 40 dont la valeur R_{L} est variable qui coopère avec un interrupteur 24' et l'interrupteur 24 pour connecter soit la résistance 26' de modulation, soit la résistance de limitation 40, et
- un dispositif de commande 30 de variation des valeurs de C, R_{mod} et R_{L}.

La variation des valeurs de la capacité C du condensateur 16', de la résistance 26' et de la résistance 40 est obtenue par des signaux électriques qui sont fournis par le dispositif 30 à partir de la valeur de certains paramètres qui sont de préférence :
- la tension d'alimentation V_{dd} fournie par le circuit de redressement et filtrage 18 sur la liaison 34,
- des messages envoyés par le dispositif de lecture via les circuits classiques 20 sur la liaison 38,
- des messages contenus dans une mémoire 32 du dispositif 30 et enregistrés au moment des tests ou de la personnalisation de l'étiquette, soit de manière directe, soit via les circuits 20 sur la liaison 36.

A titre de variante, les messages envoyés par le dispositif de lecture à l'effet de servir de paramètres au dispositif 30 peuvent aussi être enregistrés dans la mémoire 32.

Les valeurs de la résistance de modulation et de la capacité du condensateur d'accord peuvent varier de manière continue dans le cas d'une résistance du type varistance ou d'un condensateur du type varicap ; elles peuvent aussi varier de manière discrète en utilisant, par exemple, une batterie de résistances ou de condensateurs, chaque résistance ou condensateur étant associé à un interrupteur qui réalise ou non la connexion de l'élément auquel il est associé.

La résistance de limitation 40 est connectée lorsque la résistance de modulation 26' est déconnectée, c'est-à-dire lorsque le chiffre binaire à transmettre est un zéro de sorte que l'absorption du surplus d'énergie est assurée, tout ou en partie, par cette résistance 40. Cette résistance 40 est déconnectée lors de la transmission d'un chiffre binaire 1 tandis que la résistance 26' est connectée pour obtenir la modulation.

A titre de variante préférée, la résistance variable 40 peut être combinée avec la résistance variable 26' de sorte que la résistance 40 ainsi que l'interrupteur 24' sont supprimés.

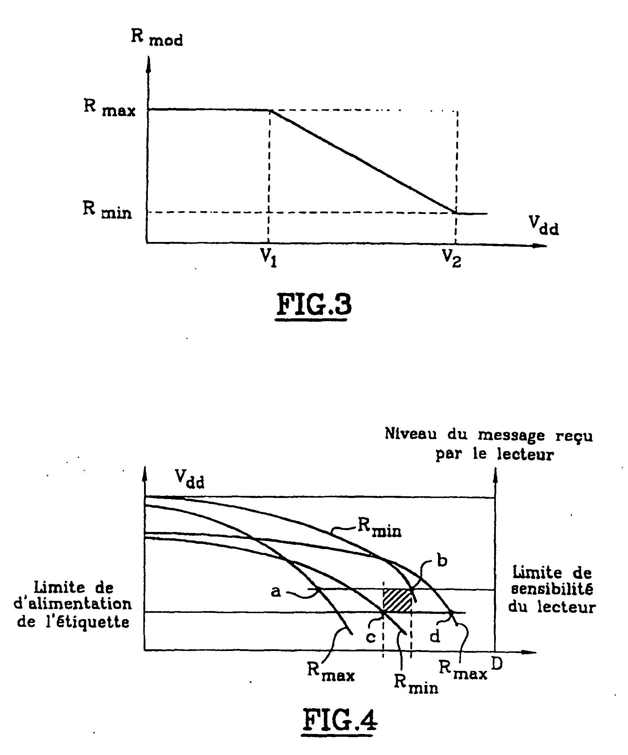

Le diagramme de la figure 3 montre une courbe de variation de la valeur R_{mod} de la résistance 26' en fonction de la tension d'alimentation V_{dd}. Ainsi, R_{mod} varie d'une valeur maximale Rₘₐₓ lorsque V_{dd} est inférieure à une valeur de seuil V₁ jusqu'à une valeur minimale Rₘᵢₙ lorsque v_{dd} dépasse ce seuil et atteint la valeur V₂.

Outre cette variation de R_{mod} en fonction de V_{dd}, le dispositif de l'invention permet d'ajuster R_{mod} pour prendre en compte d'autres éléments tels que la limite de sensibilité du lecteur, la fréquence d'accord, les éléments de l'antenne, etc. Ainsi, dans le cas d'applications où la distance entre étiquette et lecteur doit être petite, la résistance de modulation sera à sa valeur minimale pour réduire la distance d'alimentation de l'étiquette par le lecteur.

Les diagrammes de la figure 4 montrent, en fonction de la distance D entre les antennes, l'évolution de la tension d'alimentation V_{dd} de l'étiquette ainsi que l'évolution du niveau de message reçu par le lecteur et ceci pour les deux valeurs extrêmes de la résistance de modulation Rₘᵢₙ et Rₘₐₓ.

La distance horizontale entre les points a et b montre la dynamique possible sur la distance de communication pour une limite de sensibilité du lecteur. De manière similaire, la distance entre les points c et d montre l'écart de portée en prenant en compte la limite d'alimentation de 1 'étiquette. Ainsi, il apparaît une zone de fonctionnement optimale Z située entre les points b et c qui est l'intersection des zones permettant simultanément l'alimentation suffisante de l'étiquette et la réception du message par le lecteur. Afin de conserver la meilleure portée, la résistance de modulation doit varier lorsque la limite de sensibilité du lecteur change. Cette variation peut être obtenue, soit par l'envoi d'un message à l'étiquette qui indique la valeur de R_{mod}, soit être enregistrée au moment de la personnalisation de l'étiquette.

La variation de la capacité du condensateur d'accord 16' peut être effectuée en fonction de plusieurs paramètres selon les applications.

D'abord, au moment de la personnalisation et des tests de l'étiquette, il est possible d'ajuster la fréquence d'accord en transmettant un message à l'étiquette de manière à modifier la capacité du condensateur d'accord. Ceci permet de tenir compte des capacités parasites introduites par le procédé d'assemblage, des dispersions dues au procédé de fabrication.

Ce réglage peut être mis en oeuvre pour adapter, à une étiquette donnée, plusieurs modèles d'antennes dont les valeurs de self sont différentes.

Ce réglage permet aussi d'ajuster la fréquence d'accord pour un niveau nominal de la puissance émise par un lecteur de référence afin de prendre en compte un état de fonctionnement actif de l'étiquette.

Il est aussi possible de modifier l'accord d'antenne en fonction de la tension d'alimentation en mesurant cette dernière et en faisant varier en conséquence la valeur de la capacité du condensateur d'accord. Ainsi, on peut compenser les variations de la fréquence d'accord dues à différentes causes telles que la variation des capacités parasites en fonction de la tension d'alimentation, la variation du coefficient de couplage entre les antennes du lecteur et de l'étiquette, de l'environnement de l'étiquette du point de vue électromagnétique.

Dans le même ordre d'avantages présentés par le dispositif de l'invention, on peut aussi citer la possibilité de désaccorder l'antenne afin de limiter la puissance reçue, notamment lorsque l'antenne de l'étiquette est prévue pour fonctionner avec un lecteur très proche. A cet effet, on provoque un désaccord lorsque la tension d'alimentation est trop élevée.

Le dispositif de l'invention permet aussi de supprimer les trous de communication qui sont dus à la variation du couplage entre les antennes de l'étiquette et du lecteur et à leur décalage de leurs fréquences d'accord. Comme la tension d'alimentation est l'image de ce couplage, la modification de la fréquence d'accord par le biais de la variation de la capacité C permet d'éviter les trous de communication.

Enfin, comme la capacité C peut être modifiée, cette modification peut servir à moduler la charge d'antenne à la place de la variation de la résistance de modulation ou en combinaison avec elle. Cette modulation capacitive consomme moins d'énergie que la modulation résistive et une telle modulation pourrait être utilisée pour les longues distances entre lecteur et étiquette tandis qu'une modulation résistive serait mieux adaptée à des petites distances entre lecteur et étiquettes. Cette modification résistive permet de supprimer l'interrupteur 24, la modulation de l'interrupteur étant alors obtenue par les valeurs de la résistance de modulation.

## Revendications

1. Dispositif de contrôle de l'impédance ramenée sur l'antenne à circuit accordé (12) à une fréquence F₀ d'une étiquette électronique (10), cette dernière comprenant un circuit de redressement et filtrage (18) qui fournit une tension d'alimentation (V_{dd}) à tous les circuits de l'étiquette électronique, un circuit (28) de limitation de la tension d'alimentation, un circuit (20) réalisant la détection, la démodulation et l'interprétation des signaux reçus par l'antenne en provenance d'un dispositif de leçture ou de lecture/écriture ainsi que l'élaboration de messages binaires à transmettre à ce dernier et un modulateur (26) dont l'interrupteur (24) est commandé par les chiffres binaires des messages élaborés pour connecter ou non une résistance de modulation,
**caractérisé en ce qu'**il comprend, au moins :
- une résistance de modulation (26') dont la valeur (R_{mod}) peut être modifiée par un premier signal électrique, connectée directement en paralèlle à un condensateur. d'accord (16'), un circuit générateur de signaux électriques (30) pour générer au moins le premier signal électrique de modification de la résistance de modulation (26') en fonction de certains paramètres.

2. Dispositif selon la revendication 1, **caractérisé en ce qu'**il comprend une résistance de limitation (40) du courant d'antenne qui est connectée en parallèle à la résistance de modulation (26') par l'intermédiaire d'un interrupteur (24') fonctionnant en synchronisme avec l'interrupteur (24) mais en opposition de phase, ladite résistance de limitation (40) ayant une valeur (R_{L}) qui peut être modifiée par un deuxième signal électrique généré par le circuit générateur de signaux électriques (30).

3. Dispositif selon la revendication 2, **caractérisé en ce que** la résistance de limitation (40) est combinée avec la résistance de modulation (26').

4. Dispositif selon la revendication 1 à 3, **caractérisé en ce que** le condensateur (16') connecté en parallèle à la résistance de modulation (26') pour réaliser l'accord du circuit accordé d'antenne, a une capacité (C) qui peut être modifiée par un troisième signal électrique généré par le circuit générateur de signaux électriques (30)

5. Dispositif selon l'une des revendications 1 à 4, **caractérisé en ce que** le circuit générateur (30) comprend des moyens pour mesurer la tension d'alimentation (V_{dd}) et pour élaborer lesdits signaux électriques en fonction de la valeur de ladite tension d'alimentation.

6. Dispositif selon l'une des revendications 1 à 5, **caractérisé en ce qu'**il comprend, en outre, des moyens (32) pour enregistrer des messages de modification desdits signaux électriques, lesdits moyens étant fonction des conditions d'utilisation de l'étiquette électronique.

7. Dispositif selon la revendication 6, **caractérisé en ce que** les messages de modification des signaux électriques sont enregistrés ou moment de la personnalisation de l'étiquette pour tenir compte des conditions initiales de fonctionnement de l'étiquette.

8. Dispositif selon la revendication 6, **caractérisé en ce que** les messages de modification des signaux électriques sont enregistrés au cours de l'utilisation de l'étiquette sur commande du dispositif de lecture ou de lecture/écriture.

9. Dispositif selon l'une des revendications 1 à 8, **caractérisé en ce que** l'un desdits signaux électriques correspond aux messages binaires à transmettre au dispositif de lecture ou de lecture/écriture.

## Patentansprüche

1. Vorrichtung zur Kontrolle der auf die Antenne zurückgeführten Impedanz mit abgestimmtem Schaltkreis (12) mit einer Frequenz F₀ eines elektronischen Etiketts (10), wobei letzteres einen Gleichrichtungs- und Filterschaltkreis (18) umfasst, der allen Schaltkreisen des elektronischen Etiketts eine Versorgungsspannung (V_{dd}) liefert, einem Begrenzungsschaltkreis (28) der Versorgungsspannung, einem die Feststellung, die Demodulation und die Interpretation der von der Antenne empfangenen, aus einer Lese oder Lese-/Schreibvorrichtung stammenden Signale sowie die Erstellung von binären, auf diesen zu übertragenden Meldungen realisierenden Schaltkreis (20), und einem Modulator (26), dessen Schalter (24) durch die binären Zahlen der erstellten Meldungen gesteuert wird, um einen Modulationswiderstand anzuschließen oder nicht anzuschließen,
**dadurch gekennzeichnet, dass** er wenigstens Folgendes umfasst:
- einen Modulationswiderstand (26'), dessen Wert (R_{mod}) durch ein erstes direkt parallel an einen Abstimmungskondensator (16') angeschlossenes elektrisches Signal abgeändert werden kann, einen elektrische Signale (30) zur Erzeugung wenigstens des ersten elektrischen Abänderungssignals des Modulationswiderstandes (26') in Abhängigkeit von bestimmten Parametern erzeugenden Schaltkreis.

2. Vorrichtung gemäß Anspruch 1, **dadurch gekennzeichnet, dass** er einen Begrenzungswiderstand (40) des Antennenstroms umfasst, der über einen synchron mit dem Schalter (24), jedoch gegenphasig funktionierenden Schalter (24') parallel an den Modulationswiderstand (26') angeschlossen ist, wobei der genannte Begrenzungswiderstand (40) einen Wert (R_{L}) hat, der durch ein zweites, durch den elektrische Signale (30) erzeugenden Schaltkreis erzeugtes elektrisches Signal abgeändert werden kann.

3. Vorrichtung gemäß Anspruch 2, **dadurch gekennzeichnet, dass** der Begrenzungswiderstand (40) mit dem Abänderungswiderstand (26') kombiniert ist.

4. Vorrichtung gemäß Anspruch 1 bis 3, **dadurch gekennzeichnet, dass** der zur Realisierung der Abstimmung des abgestimmten Antennenschaltkreises parallel an den Modulationswiderstand (26') angeschlossene Kondensator (16') eine Kapazität (C) hat, die durch ein drittes, vom elektrische Signale (30) erzeugenden Schaltkreis erzeugtes elektrisches Signal abgeändert werden kann.

5. Vorrichtung gemäß Anspruch 1 bis 4, **dadurch gekennzeichnet, dass** der Erzeugungsschaltkreis (30) Mittel zum Messen der Versorgungsspannung (V_{dd}) und zum Erstellen der genannten elektrischen Signale in Abhängigkeit vom Wert der genannten Versorgungsspannung umfasst.

6. Vorrichtung gemäß Anspruch 1 bis 5, **dadurch gekennzeichnet, dass** sie darüber hinaus Mittel (32) zum Speichern der Abänderungsmeldungen der genannten elektrischen Signale umfasst, wobei die genannten Mittel von den Nutzungsbedingungen des elektronischen Etiketts abhängen.

7. Vorrichtung gemäß Anspruch 6, **dadurch gekennzeichnet, dass** die Abänderungsmeldungen der elektrischen Signale zum Zeitpunkt der Personalisierung des Etiketts gespeichert werden, um den anfänglichen Betriebsbedingungen des Etikettes Rechnung zu tragen.

8. Vorrichtung gemäß Anspruch 6, **dadurch gekennzeichnet, dass** die Abänderungsmeldungen der elektrischen Signale im Verlauf der Nutzung des Etiketts auf Anforderung der Lese- oder Lese-/Schreibvorrichtung gespeichert werden.

9. Vorrichtung gemäß Anspruch 1 bis 8, **dadurch gekennzeichnet, dass** eines der genannten elektrischen Signale den auf die Lese- oder Lese-/Schreibvorrichtung zu übertragenden binären Meldungen entspricht.

## Claims

1. A device for controlling the impedance returned on the antenna with a circuit (12) tuned to a frequency F₀ of an electronic label (10), the latter comprising a rectifying and filtering circuit (18) which supplies a supply voltage (V_{dd}) to all the circuits of the electronic label, a circuit (28) for limiting the supply voltage, a circuit (20) carrying out the detection, modulation and interpretation of the signals received by the antenna coming from a reading or reading/writing device as well as the production of binary messages to be transmitted to the latter and a modulator (26) whose switch (24) is controlled by the binary digits of the messages produced in order to connect or not a modulation resistor,
**characterised in that** it comprises at least:
- a modulation resistor (26') whose value (R_{mod}) can be modified by a first electrical signal, connected directly in parallel to a tuning capacitor (16'), a circuit generating electrical signals (30) in order to generate at least the first electrical signal modifying the modulation resistance (26') according to certain parameters.

2. A device according to Claim 1, **characterised in that** it comprises a resistor (40) for limiting the antenna current which is connected in parallel to the modulation resistor (26') by means of a switch (24') functioning in synchronism with the switch (24) but in phase opposition, the same limitation resistor (40) having a value (R_{L}) which can be modified by a second electrical signal generated by the electrical signal generating circuit (30).

3. A device according to Claim 2, **characterised in that** the limitation resistor (40) is combined with the modulation resistor (26').

4. A device according to Claims 1 to 3, **characterised in that** the capacitor (16') connected in parallel to the modulation resistor (26') for effecting the tuning of the tuned antenna circuit, a capacitance (C) which can be modified by a third electrical signal generated by the electrical signal generating circuit (30).

5. A device according to one of Claims 1 to 4, **characterised in that** the generating circuit (30) comprises means for measuring the supply voltage (V_{dd}) and for producing the said electrical signals according to the value of the said supply voltage.

6. A device according to one of Claims 1 to 5, **characterised in that** it also comprises means (32) for recording messages modifying the said electrical signals, the said means depending on the conditions of use of the electronic label.

7. A device according to Claim 6, **characterised in that** the messages modifying the electrical signals are recorded at the time of the personalisation of the label in order to take account of the initial operating conditions of the label.

8. A device according to Claim 6, **characterised in that** the messages modifying the electrical signals are recorded during the use of the label on command from the reading or reading/writing device.

9. A device according to any one of Claims 1 to 8, **characterised in that** one of the said electrical signals corresponds to the binary messages to be transmitted to the reading or reading/writing device.
